# EUROPEAN PATENT SPECIFICATION

(11) **EP 3 540 235 B1**
(45) Date of publication and mention of the grant of the patent: **15.06.2022**
(21) Application number: 19162510.2
(22) Date of filing: 13.03.2019
(51) Int. Cl.: F04D 15/02, H01H 35/18, G01F 23/30

(54) **CONTROL DEVICE FOR PUMPS**
STEUERUNGSVORRICHTUNG FÜR PUMPEN
DISPOSITIF DE COMMANDE POUR POMPES

(30) Priority: 14.03.2018 IT 201800002129 U
(43) Date of publication of application: 18.09.2019
(73) Proprietor: Raddi, Enrico, 50058 Signa FI (IT); Raddi, Lorenzo, 50058 Signa FI (IT)
(72) Inventor: Raddi, Enrico, 50058 Signa FI (IT); Raddi, Lorenzo, 50058 Signa FI (IT)
(74) Representative: Firmati, Leonardo

(56) References cited:
- WO-A1-82/02113
- DE-A1- 2 843 484
- US-A- 4 084 073

## Description

This invention relates to the field of hydraulic machines, in particular a control device for pumps and a level regulator comprising the above-mentioned control device.

Devices are known for controlling pumps known as floating switches and comprising a floating body connected to a pump by means of a flexible cable.

The floating body is configured so that it can be placed in a chamber or tank and, if totally or partly immersed in a liquid, be subject to a pair of forces which determine a moment on the floating element such as to incline it with an angle depending on the height of the liquid in the chamber or tank.

The pair of forces consists of the hydrostatic force directed upwards and the opposing force directed downwards applied by the cable which fixes the floating body to the pump.

Moreover, the floating body comprises a sensor for measuring the inclination, which normally consists of a ball or a sliding body which can be moved along a guide in such a way as to activate a switch when the guide (and, therefore, the floating body) reaches a angle of inclination greater than a predetermined threshold.

The switch is directly connected to the pump for driving it and powering it through an electrical connection inside the flexible cable.

In particular, the floating element in the known control devices is in the shape of rounded element or another elongate solid and is connected to the cable at a relative end portion in such a way that the flexible cable protrudes from the floating element in a direction aligned to the axis of extension of the floating body.

A movable counterweight is then fixed to the cable in such a way as to curve a portion of cable between the floating element and the connection with the pump, in such a way as to tension it in the presence of a quantity of liquid sufficient to float the pump and reach the level planned for activation of the pump.

The configuration described requires that the cable of the known switches, if coming from above, performs a curve ranging between 90° and 180° along the relative main direction of extension at the above-mentioned curved portion and, if coming from a lateral direction, remains parallel to the horizontal plane at least for a stretch.

Disadvantageously, this configuration results in a not insignificant horizontal dimension of the assembly consisting of the floating element and the cable, which precludes the use of this type of device in particularly narrow chambers or tanks which do not have a sufficient width for the cable to perform the above-mentioned curve or to lie horizontally at least for a stretch. In fact, forcing the cable to form the above mentioned curve in a non-spontaneous fashion and in a space which is too narrow risks conditioning the orientation of the float and preventing correct operation. Document US 4,084,073 discloses a control device for pumps of the known type. In this context, the technical purpose which forms the basis of the invention is to provide a control device for pumps and a relative level regulator which overcomes at least some of the above-mentioned drawbacks of the prior art.

In particular, the aim of the invention is to provide a control device for pumps and a relative level regulator which is able to reduce the overall dimensions in a configuration of use and allow the use in narrower spaces. A further aim of the invention is to provide a control device for pumps and a relative level regulator which is more reliable and effective during operation in narrow spaces.

The technical purpose indicated and the aims specified are substantially achieved by a control device for pumps and a relative level regulator comprising the technical features described in one or more of the appended claims.

The dependent claims correspond to possible embodiments of the invention.

Further features and advantages of the invention are more apparent in the non-limiting description which follows of a preferred embodiment of a control device for pumps and a relative level regulator illustrated in the accompanying drawings.

The description is set out below with reference to the accompanying drawings which are provided solely for purposes of illustration without restricting the scope of the invention and in which:
- Figure 1 is a simplified side view of a control device for pumps made according to the invention;
- Figure 2 is a simplified view of a configuration of use of a level regulator made in accordance with the invention.

With reference to the accompanying drawings, a control device for pumps is indicated generically with the reference numeral 1 and it will be referred to below as "control device 1".

The control device 1 comprises a hollow body 5 extending about an axis or main plane of extension in such a way as to have, in at least one condition of use, the above-mentioned plane or main axis of extension oriented substantially parallel to the horizontal plane. In the preferred embodiment, the hollow body 5 extends along the axis of extension "X" and has a portion with an increasing cross-section 6 along the above-mentioned axis of extension "X" and a rounded end portion 7, in such a way have a greater displacement (and therefore buoyancy) at the rounded end portion 7.

More specifically, in the embodiment illustrated, the hollow body 5 has a substantially rounded shape having a centre of hydrostatic thrust "CS" not coinciding with the centre line of the hollow body 5, but moved more to the side of the rounded end portion 6.

The hollow body 5 supports an orientation sensor 15 configured for measuring an orientation with respect to a horizontal plane, for example of the type comprising a rotary or slidable body positioned on a guide and moved along it by the force of gravity as a function of the inclination of the guide and a switch positioned along the guide in such a way as to be able to be activated by the rotary or slidable body in the presence of a predetermined angle of inclination of the guide (and therefore of the hollow body 5).

The control device 1 also comprises a flexible cable 10 connected to the hollow body 5 and comprising an electrical conductor in such a way as to connect the above-mentioned orientation sensor 15 to an actuator, in particular an electrical pump 101, in such a way that the orientation sensor 15 commands the actuation of the pump as a function of the inclination of the hollow body 5 (in particular of the relative axis of extension "X") with respect to the horizontal plane.

Advantageously, the flexible cable 10 is connected to the hollow body 5 in such a way as to protrude from it along an incident direction "P" and substantially perpendicular to the main axis of extension "X" (or of the main plane of extension in the embodiment wherein the hollow body 5 has one).

According to an equivalent embodiment, the flexible cable 10 of the control device 1 is connected to the hollow body 5 in such a way as to be substantially parallel or slightly angularly spaced relative to the direction "D" of the hydrostatic thrust force acting on the hollow body 5 when the hollow body 5 is positioned according to the orientation typical of a configuration of normal use, except for variations of inclination due to the configuration of use in relation to the level of water in the tank or chamber. Preferably, the flexible cable 10 is connected to the hollow body 5 at a lateral surface close to an end portion 8 of it, in particular of the end portion 8 opposite the rounded end portion 7 described above, in such a way as to be spaced from the portion with greater buoyancy described above.
in particular, the hydrostatic thrust force, which is directed upwards and of variable intensity as a function of the volume of the immersed part of the hollow body 5, the weight force directed downwards and the tension of the flexible cable 10 contribute to determining the orientation of the hollow body 5.

In particular, the flexible cable 10 and its connection with the hollow body 5 are configured for balancing any differences between the weight force and the hydrostatic thrust force.

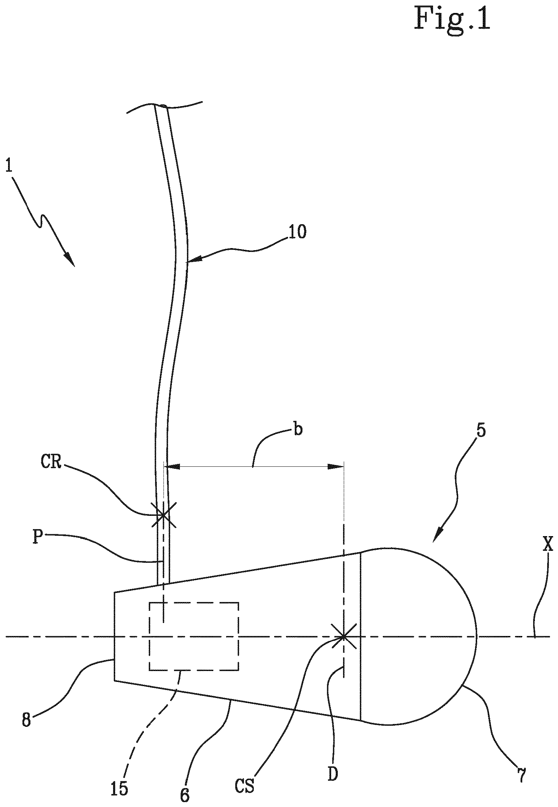

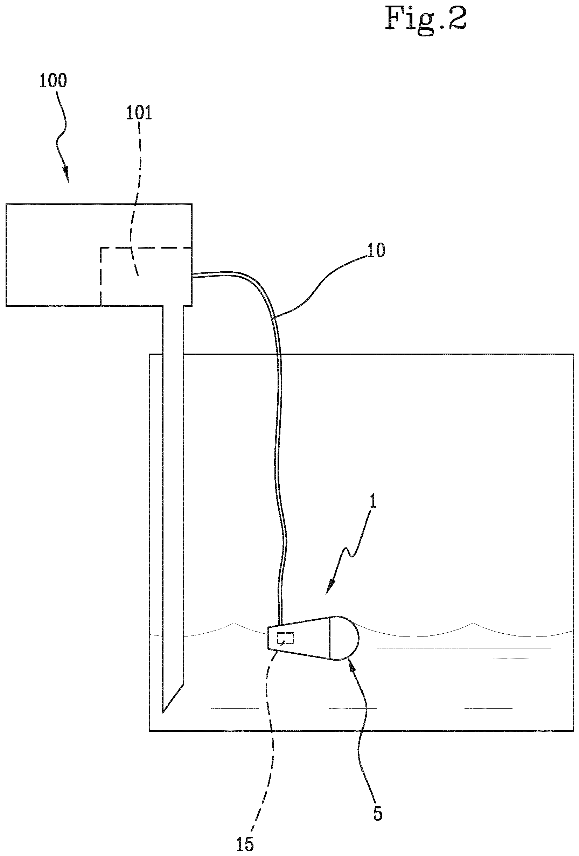

In this regard, configurations of use are possible: in a first embodiment, illustrated in Figures 1 and 2, wherein the weight of the hollow body 5 is greater than the intensity of the hydrostatic thrust force, the flexible cable 10 is configured to exert a tension upwards on the hollow body 5 to keep it at least partly raised relative to the bottom of the chamber or tank.

In a second embodiment not covered by the claimed invention, nor illustrated, wherein the weight of the hollow body 5 is less than the intensity of the hydrostatic thrust force, the flexible cable 10 is configured to apply a downward thrust on the hollow body 5.

In both the embodiments described above, the connection point between the flexible cable 10 and the hollow body 5 determines the position of the centre of rotation "CR" of the hollow body 5 with regard to the rotations due to the variations of the thrust force.

More specifically, the flexible cable 10 is connected to the hollow body 5 in a position moved away from the centre of hydrostatic thrust "CS" in such a way as to determine an arm "b" between the centre of hydrostatic thrust "CS" and the centre of rotation "CR", corresponding to the moment arm of the hydrostatic thrust force acting in use on the hollow body 5. Advantageously, the arm "b" is large enough to allow, in use, a variation of inclination of the hollow body 5 as a function of the intensity of the hydrostatic thrust force. In other words, the arm "b" is configured for determining a variation of inclination of the hollow body 5 as a function of the volume of the immersed portion of it, and therefore, in a condition of use, the quantity of liquid in the tank or chamber.

In the embodiment illustrated, the arm "b" is defined by the distance between the respective vertical projections on the axis (or plane) of main extension "X" of the centre of rotation "CR" and the centre of hydrostatic thrust "CS" in an operating configuration of the control device 1, for example an operating configuration wherein the above-mentioned axis or plane of vertical extension is horizontal.

Preferably, the arm "b" is between 50 mm and 300 mm, even more preferably between 70 mm and 200 mm.

In the first embodiment, a weight element may be positioned on the hollow body 5 in such a way as to determine an operating configuration at least partly immersed.

Preferably, the weight element is positioned substantially in alignment with the connecting portion of the flexible cable 10 to the hollow body 5 in such a way as to minimise the influence of the weight of the hollow body 5 on the balance of the moments acting on it.

The invention also relates to a level regulator 100, illustrated schematically in Figure 2, comprising an electric pump 101 and a control device 1 according to any one of the preceding claims, connected to the electric pump 101 in such a way as to control the actuation as a function of an output of the orientation sensor 15 mounted on the hollow body 5.

This invention fulfils the aim set by overcoming the drawbacks of the prior art. In particular, the mutual configuration described between the hollow body and the flexible cable makes it possible to reduce substantially the overall dimensions of this control device for pumps, at the same time safeguarding the operational effectiveness by means of the operating mechanism described.

## Claims

1. A control device (1) for pumps, comprising:
- a hollow body (5) equipped with a main axis or plane of extension (X), said hollow body (5) supporting an orientation sensor (15) configured to detect an orientation of the main axis or plane of extension (X) of said hollow body (5) relative to a horizontal plane;
- a flexible cable (10) connected to the hollow body (5) and defining an electrical connection for connecting said orientation sensor (15) to an actuator (101), said flexible cable (10) being connected to the hollow body (5) in such a way as to protrude from said hollow body (5) along a direction (P) incident with said main axis or plane of extension (X) and substantially perpendicular to said main axis or plane of extension (X), said hollow body (5) has a shape defining a centre of hydrostatic thrust (CS), said flexible cable (10) being connected to said hollow body (5) in a position moved away from the centre of hydrostatic thrust (CS), **characterized in that** said hollow body (5) has a weight greater than the hydrostatic thrust force acting on the hollow body (5) in the fully immersed condition and the flexible cable (10) being configured to exert a tension upwards on the hollow body 5 to keep it at least partly raised relative to the bottom of the chamber or tank, and **in that** said hollow body has a shape such that, in the configuration of use, the hydrostatic thrust force is not aligned with the weight force of the hollow body (5).

2. The control device (1) according to claim 1, wherein said flexible cable (10) is connected to the hollow body (5) in such a way as to define a centre of rotation (CR) of the hollow body (5) in the presence of variations in the hydrostatic thrust, the mutual arrangement of said hollow body (5) and said flexible cable (10) determining an arm between the centre of rotation (CR) and the centre of hydrostatic thrust (CS) configured to allow, in a condition of at least partial immersion, a variation of inclination of the hollow body (5) as a function of the intensity of the hydrostatic thrust force.

3. The control device (1) according to claim 2, wherein said arm is between 50 mm and 300 mm, preferably between 70 mm and 200 mm.

4. The control device (1) according to any one of the preceding claims, wherein said hollow body (5) has a substantially rounded shape, said flexible cable (10) being connected to the hollow body (5) at a side surface of the rounded shape close to an end portion (8) of the hollow body (5).

5. The control device (1) according to any one of the preceding claims, wherein said hollow body (5) has an extension with an increasing cross-section away from the connection point with the flexible cable (10).

6. The control device (1) according to claim 1, wherein said hollow body (5) comprises a weight element positioned substantially aligned with the direction (P) of the flexible cable at the connection with the hollow body (5).

7. A level regulator comprising an electric pump (101) and a control device (1) according to any one of the preceding claims, connected to said electric pump in such a way as to control an actuation of the electric pump as a function of an output of the orientation sensor (15).

## Patentansprüche

1. Steuerungsvorrichtung (1) für Pumpen, umfassend:
- ein hohles Gehäuse (5), das mit einer Hauptachse oder -ausdehnungsebene (X) ausgestattet ist, wobei das hohle Gehäuse (5) einen Ausrichtungssensor (15) trägt, der ausgelegt ist, um eine Ausrichtung der Hauptachse oder -ausdehnungsebene (X) des hohlen Gehäuses (5) relativ zu einer horizontalen Ebene zu erfassen;
- ein flexibles Kabel (10), das mit dem hohlen Gehäuse (5) verbunden ist und einen elektrischen Anschluss für den Anschluss des Ausrichtungssensors (15) an einen Steller (101) definiert, wobei das flexible Kabel (10) mit dem hohlen Gehäuse (5) verbunden ist, sodass es aus dem hohen Gehäuse (5) entlang einer Richtung (P) hervorsteht, die die Hauptachse oder -ausdehnungsebene (X) schneidet und im Wesentlichen senkrecht zur Hauptachse oder - ausdehnungsebene (X) angeordnet ist, wobei das hohle Gehäuse (5) eine Form aufweist, die einen hydrostatischen Druckmittelpunkt (CS) definiert, wobei das flexible Kabel (10) mit dem hohlen Gehäuse (5) an einer Position verbunden ist, die versetzt vom hydrostatischen Druckmittelpunkt (CS) angeordnet ist,
**dadurch gekennzeichnet, dass** das hohle Gehäuse (5) ein Gewicht aufweist, das größer ist als die hydrostatische Druckkraft, die auf das hohle Gehäuse (5) im voll eingetauchten Zustand wirkt, und das flexible Kabel (10) ausgelegt ist, um eine Aufwärtsspannung auf dem hohlen Gehäuse (5) zu erzeugen, um dieses zumindest teilweise angehoben relativ zum Boden der Kammer oder des Tanks zu halten, und dadurch, dass das hohle Gehäuse eine Form aufweist, die so beschaffen ist, dass die hydrostatische Druckkraft in der Verwendungsauslegung nicht zur Gewichtskraft des hohlen Gehäuses (5) ausgerichtet ist.

2. Steuerungsvorrichtung (1) nach Anspruch 1, wobei das flexible Kabel (10) mit dem hohlen Gehäuse (5) so verbunden ist, dass es ein Rotationsmittelpunkt (CR) des hohlen Gehäuses (5) bei Veränderungen des hydrostatischen Drucks definiert, wobei die gegenseitige Anordnung des hohlen Gehäuses (5) und des flexiblen Kabels (10) einen Arm zwischen dem Rotationsmittelpunkt (CR) und dem hydrostatischen Druckmittelpunkt (CS) bestimmt, der ausgelegt ist, um in einem teilweise eingetauchten Zustand eine Neigungsänderung des hohlen Gehäuses (5) als eine Funktion der Intensität der hydrostatischen Druckkraft zu erlauben.

3. Steuerungsvorrichtung (1) nach Anspruch 2, wobei der Arm zwischen 50 mm und 300 mm, vorzugsweise zwischen 70 mm und 200 mm eingeschlossen ist.

4. Steuerungsvorrichtung (1) nach einem der vorhergehenden Ansprüche, wobei das hohle Gehäuse (5) eine im Wesentlichen abgerundete Form aufweist, wobei das flexible Kabel (10) mit dem hohlen Gehäuse (5) an einer Seitenoberfläche der abgerundeten Form nah an einem Endabschnitt (8) des hohlen Gehäuses (5) verbunden ist.

5. Steuerungsvorrichtung (1) nach einem der vorhergehenden Ansprüche, wobei das hohle Gehäuse (5) eine Ausdehnung mit einem zunehmenden Querschnitt wegführend vom Verbindungpunkt mit dem flexiblen Kabel (10) aufweist.

6. Steuerungsvorrichtung (1) nach Anspruch 1, wobei das hohle Gehäuse (5) ein Gewichtselement umfasst, das im Wesentlichen fluchtend zur Richtung (P) des flexiblen Kabels an der Verbindung mit dem hohlen Gehäuse (5) positioniert ist.

7. Niveauregler, umfassend eine elektrische Pumpe (101) und eine Steuerungsvorrichtung (1) nach einem der vorhergehenden Ansprüche, verbunden mit der elektrischen Pumpe, sodass eine Betätigung der elektrischen Pumpe als eine Funktion einer Ausgabe des Ausrichtungssensors (15) gesteuert wird.

## Revendications

1. Dispositif de commande (1) pour pompes, comprenant :
- un corps creux (5) équipé d'un axe ou plan d'extension principal (X), ledit corps creux (5) supportant un capteur d'orientation (15) configuré pour détecter une orientation de l'axe ou plan d'extension principal (X) dudit corps creux (5) par rapport à un plan horizontal ;
- un câble flexible (10) relié au corps creux (5) et définissant une connexion électrique pour connecter ledit capteur d'orientation (15) à un actionneur (101), ledit câble souple (10) étant connecté au corps creux (5) de manière à faire saillie dudit corps creux (5) le long d'une direction (P) incidente avec ledit axe ou plan d'extension principal (X) et sensiblement perpendiculaire audit axe ou plan d'extension principal (X), ledit corps creux (5) a une forme définissant un centre de poussée hydrostatique (CS), ledit câble souple (10) étant relié audit corps creux (5) dans une position éloignée du centre de poussée hydrostatique (CS), **caractérisé en ce que** ledit corps creux (5) a un poids supérieur à la force de poussée hydrostatique agissant sur le corps creux (5) dans la condition d'immersion totale et le câble souple (10) étant configuré pour exercer une tension vers le haut sur le corps creux (5) pour le maintenir au moins partiellement élevé par rapport au fond de la chambre ou du réservoir, et **en ce que** ledit corps creux a une forme telle que, dans la configuration d'utilisation, la force de poussée hydrostatique n'est pas alignée sur la force de poids du corps creux (5).

2. Dispositif de commande (1) selon la revendication 1, dans lequel ledit câble souple (10) est relié au corps creux (5) de manière à définir un centre de rotation (CR) du corps creux (5) en présence de variations de la poussée hydrostatique, la disposition mutuelle dudit corps creux (5) et dudit câble souple (10) déterminant un bras entre le centre de rotation (CR) et le centre de poussée hydrostatique (CS) configuré pour permettre, dans une condition d'immersion au moins partielle, une variation d'inclinaison du corps creux (5) en fonction de l'intensité de la force de poussée hydrostatique.

3. Dispositif de commande (1) selon la revendication 2, dans lequel ledit bras est entre 50 mm et 300 mm, de préférence entre 70 mm et 200 mm.

4. Dispositif de commande (1) selon l'une quelconque des revendications précédentes, dans lequel ledit corps creux (5) a une forme sensiblement arrondie, ledit câble souple (10) étant relié au corps creux (5) au niveau d'une surface latérale de la forme arrondie proche d'une partie d'extrémité (8) du corps creux (5).

5. Dispositif de commande (1) selon l'une quelconque des revendications précédentes, dans lequel ledit corps creux (5) présente une extension de section croissante à partir du point de connexion avec le câble souple (10).

6. Dispositif de commande (1) selon la revendication 1, dans lequel ledit corps creux (5) comprend un élément de poids positionné de manière sensiblement alignée avec la direction (P) du câble souple au niveau de la connexion avec le corps creux (5).

7. Régulateur de niveau, comprenant une électropompe (101) et un dispositif de commande (1) selon l'une quelconque des revendications précédentes, relié à ladite électropompe de manière à commander un actionnement de l'électropompe en fonction d'une sortie du capteur d'orientation (15).
